(19) Europäisches Patentamt / European Patent Office / Office européen des brevets

(11) **EP 4 481 843 A1**

(12) **EUROPEAN PATENT APPLICATION**
published in accordance with Art. 153(4) EPC

(43) Date of publication:
**25.12.2024 Bulletin 2024/52**

(21) Application number: **23774019.6**

(22) Date of filing: **24.03.2023**

(51) International Patent Classification (IPC):
**H01M 4/131** (2010.01)       **H01M 4/133** (2010.01)
**H01M 10/0525** (2010.01)

(52) Cooperative Patent Classification (CPC):
**H01M 4/13; H01M 4/131; H01M 4/133;
H01M 4/136; H01M 4/64; H01M 10/052;
H01M 10/0525;** Y02E 60/10

(86) International application number:
**PCT/CN2023/083782**

(87) International publication number:
**WO 2023/179775 (28.09.2023 Gazette 2023/39)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **24.03.2022  CN 202210296429**

(71) Applicant: **BYD Company Limited
Shenzhen, Guangdong 518118 (CN)**

(72) Inventors:
• **GE, Liping**
  **Shenzhen, Guangdong 518118 (CN)**
• **HAO, Rong**
  **Shenzhen, Guangdong 518118 (CN)**
• **ZHUANG, Minghao**
  **Shenzhen, Guangdong 518118 (CN)**
• **TIAN, Yecheng**
  **Shenzhen, Guangdong 518118 (CN)**
• **SU, Bizhe**
  **Shenzhen, Guangdong 518118 (CN)**

(74) Representative: **Dehns Germany Partnerschaft
mbB
Theresienstraße 6-8
80333 München (DE)**

(54) **ELECTRODE SHEET, LITHIUM BATTERY AND POWERED VEHICLE**

(57) An electrode, a lithium battery, and a motor vehicle are provided. The electrode includes a current collector and an electrode active material layer arranged on at least one side surface of the current collector. The electrode active material layer includes at least two electrode active material sub-layers. The electrode active material sub-layers meet: $n \times \delta_i \leq 10000$, $n \geq 2$, and $\delta_i \leq 5000$; and $H_{i-1} < H_i$. The first electrode active material sub-layer is in contact with the current collector.

FIG. 1

EP 4 481 843 A1

**Description**

## CROSS REFERENCE TO RELATED APPLICATIONS

This application claims priority to and benefits of Chinese Patent Application No. 202210296429.4, filed on March 24, 2022, and entitled "ELECTRODE, LITHIUM BATTERY, AND MOTOR VEHICLE". The entire content of the above-referenced application is incorporated herein by reference.

## FIELD

The present disclosure relates to the field of lithium battery technologies, and specifically, to an electrode, a lithium battery, and a motor vehicle.

## BACKGROUND

With the development of new energy industry, requirements of the market for the energy density of lithium batteries are increasing. Increasing the compaction density of an electrode is one of the important ways to increase the energy density of a lithium battery. However, during preparation of the electrode, when the electrode is subjected to rolling, a force of an electrode active material loaded on a current collector in a thickness direction of the electrode is uneven, which tends to cause cracking of electrode active material particles at a surface layer, affecting stability of the electrode active material. In addition, the cracked electrode active material consumes more electrolyte, and may even affect the porosity of the electrode, increase the internal resistance of the battery, hinder the exertion of the battery capacity, and shorten the battery life.

## SUMMARY

A first aspect of the present disclosure provides an electrode. The electrode includes a current collector and an electrode active material layer arranged on at least one side surface of the current collector. The electrode active material layer includes at least two electrode active material sub-layers, and the electrode active material sub-layers meet the following relational expressions:

$$n \times \delta_i \leq 10000, \ n \geq 2, \ \text{and} \ \delta_i \leq 5000;$$

and

$$H_{i-1} < H_i.$$

n represents a total quantity of the electrode active material sub-layers, and i is any integer value between 2 and n. $H_i$ represents hardness of an $i^{th}$ electrode active material sub-layer, and $H_1$ represents hardness of a first electrode active material sub-layer, both in units of MPa. The first electrode active material sub-layer is in contact with the current collector. $\delta_i$ represents an absolute value of a hardness difference between the $i^{th}$ electrode active material sub-layer and an $(i-1)^{th}$ electrode active material sub-layer, and is in units of MPa.

Optionally, $\delta_i \leq 1200$.

Optionally, n, $\delta_i$, and a maximum compaction density $\alpha$ of the electrode meet the following quantitative relation: when 1.4 g/cm$^3 \leq \alpha < 1.7$ g/cm$^3$, n $\geq 2$, and $\delta_i \leq 1000$.

Optionally, n, $\delta_i$, and a maximum compaction density $\alpha$ of the electrode meet the following quantitative relation: when 2.5 g/cm$^3 \leq \alpha < 2.75$ g/cm$^3$, n $\geq 2$, and $\delta_i \leq 700$.

Optionally, n, $\delta_i$, and a maximum compaction density $\alpha$ of the electrode meet the following quantitative relation: when 3.3 g/cm$^3 \leq \alpha < 3.75$ g/cm$^3$, n $\geq 2$, and $\delta_i \leq 600$.

Optionally, $\delta_i \leq 100$.

Optionally, $\delta_i \leq 50$.

Optionally, a value of the maximum compaction density $\alpha$ of the electrode meets: 0 g/cm$^3 < \alpha < 10$ g/cm$^3$.

Optionally, a value of the maximum compaction density $\alpha$ of the electrode meets: 0 g/cm$^3 < \alpha < 5$ g/cm$^3$.

Optionally, n, $\delta_i$, and a maximum compaction density $\alpha$ of the electrode meet the following quantitative relation: when 1.3 g/cm$^3 \leq \alpha < 1.8$ g/cm$^3$, or 2.6 g/cm$^3 \leq \alpha < 2.8$ g/cm$^3$, or 3.65 g/cm$^3 < \alpha < 5$ g/cm$^3$, n $\geq 10$, and $\delta_i \leq 5$.

Optionally, in the electrode, absolute values of hardness differences between any two adjacent electrode active material sub-layers are equal.

Optionally, the electrode is a positive electrode, and the positive electrode is loaded with a positive active material. The positive active material includes at least one of lithium iron phosphate, lithium manganese phosphate, lithium iron manganese phosphate, lithium vanadium phosphate, lithium cobalt phosphate, lithium cobaltate, lithium manganate, lithium nickel manganate, a lithium nickel cobalt manganese oxygen ternary material, a lithium nickel cobalt aluminum oxygen ternary material, or a lithium nickel manganese cobalt aluminum oxygen quaternary material.

Optionally, the electrode is a negative electrode, and the negative electrode is loaded with a negative active material. The negative active material includes at least one of graphite, natural graphite, mesocarbon microbeads, or a silicon-carbon anode material.

Optionally, the electrode is a positive electrode, the positive electrode is loaded with a positive active material, and the positive active material includes a multi-element nickel-containing active material doped with magnesium. The multi-element nickel-containing active material includes at least one of a lithium nickel cobalt manganese oxygen ternary material, a lithium nickel cobalt aluminum oxygen ternary material, or a lithium nickel manganese cobalt aluminum oxygen quaternary material.

Optionally, a mass content of a magnesium element in the multi-element nickel-containing active material doped with magnesium is greater than 0 and less than 4000 ppm.

Optionally, a general structural formula of the lithium nickel cobalt manganese oxygen ternary material is $Li_{1+m}Ni_xCo_yMn_{1-x-y}O_2$, where $x \geq 0.33$, $0 \leq y \leq 0.4$, and $0 \leq m \leq 0.1$.

Optionally, a general structural formula of the lithium nickel cobalt aluminum oxygen ternary material is $Li_{1+m}Ni_xCo_yAl_{1-x-y}O_2$, where $x \geq 0.33$, $0 \leq y \leq 0.4$, and $0 \leq m \leq 0.1$.

Optionally, a general structural formula of the lithium nickel manganese cobalt aluminum oxygen quaternary material is $Li_{1+m}Ni_xCo_yMn_zAl_{1-x-y-z}O_2$, where $x \geq 0.33$, $0 \leq y \leq 0.4$, $0 \leq z \leq 0.4$, and $0 \leq m \leq 0.1$.

Optionally, a value range of x is: $0.70 \leq x \leq 0.98$.

A second aspect of the present disclosure provides a lithium battery. The lithium battery includes the electrode according to the first aspect of the present disclosure.

A third aspect of the present disclosure provides a motor vehicle. The motor vehicle includes the lithium battery according to the second aspect of the present disclosure.

## BRIEF DESCRIPTION OF THE DRAWINGS

FIG. 1 is a schematic diagram of a cross-sectional structure of an electrode according to an embodiment of the present disclosure.

FIG. 2 is a schematic diagram of a lithium battery according to an embodiment of the present disclosure.

FIG. 3 is a schematic diagram of a motor vehicle according to an embodiment of the present disclosure.

Reference numerals are described as follows: 100-electrode; 10-electrode active material layer; 11-current collector; 101-first electrode active material sub-layer; 102-second electrode active material sub-layer; 10n-nth electrode active material sub-layer; 200-lithium battery; and 300-motor vehicle.

## DETAILED DESCRIPTION

The technical solutions of the present disclosure are described below in detail with reference to specific embodiments.

Generally, a compaction density that can be achieved by each electrode active material is in a specific range. A single electrode active material cannot achieve a maximum compaction density of an electrode while ensuring the particle integrity of the electrode active material. Preparing an electrode with gradient hardness can effectively resolve the foregoing problem.

An embodiment of the present disclosure provides an electrode. The electrode includes a current collector and an electrode active material layer arranged on at least one side surface of the current collector. The electrode active material layer includes at least two electrode active material sub-layers. The electrode active material sub-layers meet the following relational expressions:

$$n \times \delta_i \leq 10000, n \geq 2, \text{ and } \delta_i \leq 5000;$$

and

$$H_{i-1} < H_i \text{ (Relational expression 1)}.$$

n represents a total quantity of the electrode active material sub-layers, and i is any integer value between 2 and n. $H_i$ represents hardness of an $i^{th}$ electrode active material sub-layer, and $H_1$ represents hardness of a first electrode active material sub-layer, both in units of MPa. The first electrode active material sub-layer is in contact with the current collector. $\delta_i$ represents an absolute value of a hardness difference between the $i^{th}$ electrode active material sub-layer and an $(i-1)^{th}$ electrode active material sub-layer, and is in units of MPa.

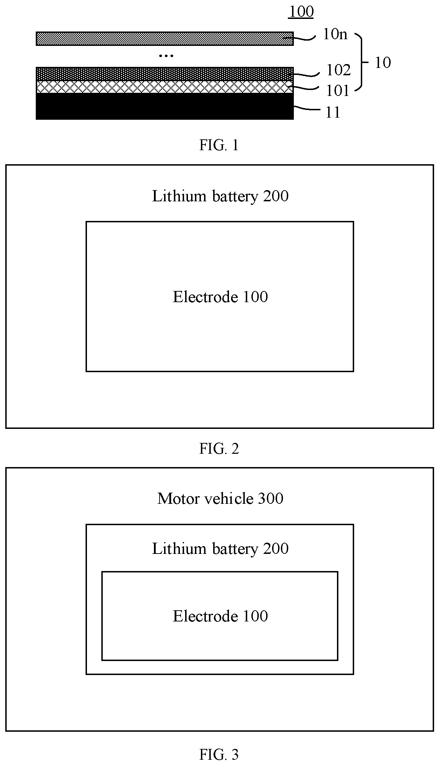

The electrode is provided with multiple electrode active material sub-layers. An electrode active material sub-layer in contact with the current collector is defined as a first electrode active material sub-layer. In a thickness direction of the electrode, the sub-layers from a current collector side to a surface of the electrode are respectively a second electrode active material sub-layer, a third electrode active material sub-layer, a fourth electrode active material sub-layer, a fifth electrode active material sub-layer, ..., and an $n^{th}$ electrode active material sub-layer. The hardness from the first electrode active material sub-layer to the $n^{th}$ electrode active material sub-layer gradually increases (as shown in FIG. 1, an electrode 100 includes a current collector 11 and an electrode active material layer 10 arranged on the current collector 11. The electrode active material layer 10 is formed by a first electrode active material sub-layer 101, a second electrode active material sub-layer 102, ..., and an $n^{th}$ electrode active material sub-layer 10n). When an absolute value of a hardness difference between the electrode active material sub-layers meets the relational expression 1, it can be ensured that the hardness difference between two adjacent electrode active material sub-layers falls within an acceptable range. In a process of rolling the electrode, a pressure to which the electrode active material sub-layer at a surface layer is subjected is maximum. When the pressure is conducted to the current collector side, the pressure to which the electrode active material sub-layers are subjected decreases layer by layer. Since the pressure to which each sub-layer is subjected matches the hardness of the sub-layer, the electrode active materials in the sub-layers are less prone to cracking. In this way, the particle integrity of the electrode active material can be ensured while the entire electrode has a high maximum compaction density, thereby improving the energy density of the battery and extending the cycle life of the battery. When the hardness difference between the electrode active material sub-layers is excessively large (the foregoing relational expression 1 is not met), in the process of rolling the electrode, the $i^{th}$ sub-layer can withstand a large pressure. However, when the pressure is conducted to the $(i-1)^{th}$ electrode active material sub-layer, the pressure to which the $(i-1)^{th}$ electrode active material sub-layer is subjected is greater than the hardness of the $(i-1)^{th}$ electrode active material sub-layer. Consequently, it is impossible to avoid the cracking of the electrode active material in the $(i-1)^{th}$ electrode active material sub-layer, affecting performance of a lithium battery.

In the present disclosure, the electrode active material generally refers to electrode active material particles, and the cracking of the electrode active material generally refers to cracking of the electrode active material particles. The hardness of each electrode active material sub-layer may be considered as hardness of the electrode active material particles. Specifically, a method for testing the hardness of the electrode active material sub-layer (that is, the hardness of the electrode active material particles) is as follows:

(1) From an outermost side of the electrode, the electrode active material particles of each electrode active material sub-layer are separately collected.

(2) A hardness test is performed on a single electrode active material particle by using a field emission scanning electron microscope (field emission scanning electron microscopy, FESEM). The specific test step is as follows: An pointer with a pressure sensor is used to apply a linearly increasing pressure to the single electrode active material particle until the electrode active material particle cracks. In this case, the pressure at the tip of the pointer changes abruptly, and an inflection point occurs in a force curve of the electrode active material particle fed back by the pressure sensor. In this case, the pressure on the electrode active material particle is stopped, and a cracking state of the electrode active material particle is observed.

(3) A pressure value at the inflection point of the force curve is recorded as a cracking pressure of the electrode active material particle. Calculation is performed according to the following formula, to obtain a hardness value $H_0$ of the electrode active material particle: $H_0 = 2.8P(\pi r^2)$, where P is a particle cracking pressure in units of N; r is a diameter of the particle in units of $\mu m$; and $H_0$ is in units of MPa.

(4) At least 500 electrode active material particle samples are taken from each electrode active material sub-layer. The hardness of each of the at least 500 electrode active material particle samples is tested according to the foregoing step. An arithmetic mean of the hardness of the at least 500 electrode active material particles is taken. The arithmetic mean is used to refer to the hardness of the corresponding electrode active material sub-layer. Particularly, when the electrode active material sub-layer is a mixture of different electrode active material particles, the hardness of the sub-layer is a mass-weighted average hardness value of the electrode active material particles.

In the present disclosure, $\delta_i$ represents an absolute value of a hardness difference between the $i^{th}$ electrode active material sub-layer and the $(i-1)^{th}$ electrode active material sub-layer. Specifically, $\delta_2 = |H_2 - H_1|$, $\delta_3 = |H_3 - H_2|$, ..., $\delta_n = |$

$H_n-H_{n-1}|$, and so on. The values of $\delta_i$ may be the same or may be different.

In the present disclosure, each electrode active material sub-layer may be formed by a single electrode active material, or may be formed by a mixture of different electrode active materials. The electrode active materials in the electrode active material sub-layers may be different or the same. For some specific electrode active materials, the hardness of the electrode active material may be changed by changing a preparation process of the electrode active material, or by doping or cladding the electrode active material. Therefore, an electrode containing a single type of electrode active material and having the gradient hardness can be prepared.

In some implementations of the present disclosure, $\delta_i \leq 1200$. In some implementations of the present disclosure, $\delta_i \leq 100$. In some implementations of the present disclosure, $\delta_i \leq 50$. In this case, the hardness difference between two adjacent electrode active material sub-layers is less, which is more conducive to ensuring the particle integrity of the electrode active material.

In some implementations of the present disclosure, n, $\delta_i$, and a maximum compaction density $\alpha$ of the electrode meet the following quantitative relation: when $1.4$ g/cm$^3 \leq \alpha < 1.7$ g/cm$^3$, $n \geq 2$, and $\delta_i \leq 1000$; when $2.5$ g/cm$^3 \leq \alpha < 2.75$ g/cm$^3$, $n \geq 2$, and $\delta_i \leq 700$; and when $3.3$ g/cm$^3 \leq \alpha < 3.75$ g/cm$^3$, $n \geq 2$, and $\delta_i \leq 600$.

In the same case, a larger total quantity n of the electrode active material sub-layers and/or a smaller absolute value of the hardness difference between two adjacent layers indicates a smaller hardness gradient of the electrode active material layer in the thickness direction. It can be understood that the maximum compaction density $\alpha$ of the electrode is related to a specific type of the electrode active material used. When some electrode active materials are selected, a maximum compaction density of a prepared electrode falls within the foregoing specific range (for example, $1.4$ g/cm$^3 \leq \alpha < 1.7$ g/cm$^3$, or $2.5$ g/cm$^3 \leq \alpha < 2.75$ g/cm$^3$, or $3.3$ g/cm$^3 \leq \alpha < 3.75$ g/cm$^3$). Values of n and $\delta_i$ are determined according to characteristics of the electrode active material, so that the values of n and $\delta_i$ fall within the corresponding range respectively (for example, when $1.4$ g/cm$^3 \leq \alpha < 1.7$ g/cm$^3$, $n \geq 2$, and $\delta_i \leq 1000$; when $2.5$ g/cm$^3 \leq \alpha < 2.75$ g/cm$^3$, $n \geq 2$, and $\delta_i \leq 700$; and when $3.3$ g/cm$^3 \leq \alpha < 3.75$ g/cm$^3$, $n \geq 2$, and $\delta_i \leq 600$), which is more conducive to the preparation of the electrode.

In this implementation of the present disclosure, the value of the maximum compaction density $\alpha$ of the electrode meets: $0$ g/cm$^3 < \alpha < 10$ g/cm$^3$. In some specific embodiments of the present disclosure, the value of $\alpha$ meets: $0$ g/cm$^3 < \alpha < 5$ g/cm$^3$.

In some other implementations of the present disclosure, n, $\delta$, and $\alpha$ meet the following quantitative relation: when $1.3$ g/cm$^3 \leq \alpha < 1.8$ g/cm$^3$, or $2.6$ g/cm$^3 \leq \alpha < 2.8$ g/cm$^3$, or $3.65$ g/cm$^3 < \alpha < 5$ g/cm$^3$, $n \geq 10$, and $\delta_i \leq 5$. In some other implementations of the present disclosure, when $5$ g/cm$^3 < \alpha < 10$ g/cm$^3$, $n \geq 15$, and $\delta_i \leq 2$. When n, $\delta$, and $\alpha$ meet the following quantitative relation, it may be further conducive to obtaining a high-performance battery.

In some other implementations of the present disclosure, in the electrode, absolute values of hardness differences between any two adjacent electrode active material sub-layers are equal. Specifically, $|H_2-H_1|=|H_3-H_2|=...=|H_n-H_{n-1}|$. In this case, the uniformity of the hardness gradient of the electrode can be further improved, and the design of the electrode can also be simplified.

In some implementations of the present disclosure, the electrode active material includes a positive active material or a negative active material. It may be understood that when the electrode is a positive electrode, the electrode active material is the positive active material. When the electrode is a negative electrode, the electrode active material is the negative active material. The positive active material and the negative active material are commonly used materials in the battery field.

The positive active material includes, but is not limited to, at least one of lithium iron phosphate, lithium manganese phosphate, lithium iron manganese phosphate, lithium vanadium phosphate, lithium cobalt phosphate, lithium cobaltate, lithium manganate, lithium nickel manganate, a lithium nickel cobalt manganese oxygen ternary material, a lithium nickel cobalt aluminum oxygen ternary material, or a lithium nickel manganese cobalt aluminum oxygen quaternary material. The negative active material includes, but is not limited to, at least one of graphite, natural graphite, mesocarbon microbeads, or a silicon-carbon anode material. The positive active material or negative active material may be an undoped or uncladded electrode active material, or may be a doped or cladded electrode active material.

In some implementations of the present disclosure, the positive active material includes, but is not limited to, a multi-element nickel-containing active material doped with magnesium. The multi-element nickel-containing active material includes, but is not limited to, at least one of a lithium nickel cobalt manganese oxygen ternary material, a lithium nickel cobalt aluminum oxygen ternary material, or a lithium nickel manganese cobalt aluminum oxygen quaternary material. In the present disclosure, the multi-element nickel-containing active material refers to a ternary and above (generally, ternary or quaternary) nickel-containing active material. NCM represents the lithium nickel cobalt manganese oxygen ternary material. In some implementations, a general structural formula of the NCM may be represented as $Li_{1+m}Ni_xCo_yMn_{1-x-y}O_2$ ($x \geq 0.33$, $0 \leq y \leq 0.4$, and $0 \leq m \leq 0.1$). NCA represents the lithium nickel cobalt aluminum oxygen ternary material. In some implementations, a general structural formula of the NCA may be represented as $Li_{1+m}Ni_xCo_yAl_{1-x-y}O_2$ ($x \geq 0.33$, $0 \leq y \leq 0.4$, and $0 \leq m \leq 0.1$). NCMA represents the lithium nickel manganese cobalt aluminum oxygen quaternary material. In some implementations, a general structural formula of the NCMA may be represented as $Li_{1+m}Ni_xCo_yMn_zAl_{1-x-y-z}O_2$ ($x \geq 0.33$, $0 \leq y \leq 0.4$, $0 \leq z \leq 0.4$, and $0 \leq m \leq 0.1$).

In some implementations of the present disclosure, a value range of x is: $0.70 < x < 0.98$. In addition, when the value of x is high, the multi-element nickel-containing material may also be referred to as a "multi-element high-nickel material".

In some implementations of the present disclosure, when the electrode active material used is the multi-element nickel-containing active material doped with Mg, a mass content of a magnesium element in the multi-element nickel-containing active material doped with magnesium is greater than 0 and less than 4000 ppm.

Generally, a higher Mg doping amount indicates higher hardness of the multi-element nickel-containing active material doped with Mg. In the electrode of the present disclosure, the Mg doping amount in the electrode active material sub-layers successively increases from the first electrode active material sub-layer to the $n^{th}$ electrode active material sub-layer. In this way, the hardness successively increases from the first electrode active material sub-layer to the $n^{th}$ electrode active material sub-layer. Therefore, only by adjusting the Mg doping amount in the multi-element nickel-containing active material, the hardness of the multi-element nickel-containing active material can be precisely controlled, so that an electrode containing only a single type of active material and having the gradient hardness can be precisely prepared. Similarly, the electrode containing only a single electrode active material can also be prepared by doping with other metal elements or in another manner such as cladding or changing the preparation process of the electrode active material.

During preparation of the electrode, the electrode active material layer may be formed on the surface of the current collector in a coating manner. The coating includes drip coating, brushing, spraying, dipping, knife coating, and spin coating. A specific coating manner may be determined according to a raw material of the electrode active material sub-layer. The raw material contains an electrode active material, a binder, and an optional conductive agent. The raw material may be a liquid or a solid.

In some implementations of the present disclosure, the raw material is a liquid raw material containing a solvent. The liquid raw material may be formed on the current collector by drip coating, brushing, spraying, dipping, knife coating, spin coating, or the like. Specifically, the electrode active material sub-layers may be coated layer by layer on the surface of the current collector, and coated layer by layer and dried layer by layer to form the electrode active material layer. Alternatively, multiple electrode active material sub-layers may be coated at a time by using multiple layers of coating dies and dried to form the electrode active material layer. In some other implementations, when the raw material is a solid raw material, the solid raw material may be formed on the current collector by powder spraying or the like (that is, the electrode active material layer is prepared in a dry method).

Referring to FIG. 2, an embodiment of the present disclosure further provides a lithium battery 200. The lithium battery 200 includes the electrode 100 according to the embodiments of the present disclosure. In some implementations, a positive electrode in the lithium battery 200 is the electrode 100 according to the present disclosure, and a negative electrode is a conventional pole piece. In some implementations, the negative electrode in the lithium battery 200 is the electrode 100 according to the present disclosure, and the positive electrode is a conventional pole piece. In some implementations, both the positive electrode and the negative electrode in the lithium battery 200 are the electrodes 100 according to the present disclosure.

The battery has excellent energy density and a long cycle life.

Referring to FIG. 3, an embodiment of the present disclosure further provides a motor vehicle 300. The motor vehicle 300 includes the lithium battery 200 according to the embodiments of the present disclosure. The lithium battery 200 includes the electrode 100 according to the embodiments of the present disclosure. The motor vehicle 300 has a high endurance mileage.

The embodiments provided in the present disclosure are specifically described below.

First, a series of ternary nickel-containing materials ($LiNi_{0.8}Co_{0.1}Mn_{0.1}O_2$, and NCM811) with different Mg doping amounts are prepared, and hardness of the doped NCM811 is measured. When the Mg doping amount is 400 ppm, the NCM811 has a hardness of about 100 MPa. When the Mg doping amount is about 700 ppm, the NCM811 has a hardness of 125 MPa. When the Mg doping amount is 1000 ppm, the NCM811 has a hardness of about 150 MPa. When the Mg doping amount is 1500 ppm, the NCM811 has a hardness of about 175 MPa, and so on.

Embodiment 1

(1) Preparation of a positive electrode: 100 g of NCM811, 1 g of conductive agent Super P, and 0.5 g of binder PVDF5130 are added to N-methylpyrrolidone (NMP), and mixed evenly to obtain a positive electrode paste. A preset maximum compaction density of the electrode is 3.6 $g/cm^3$. The positive electrode paste is coated on a surface of a positive electrode current collector-aluminum foil through a three-layer coating die. After drying, rolling, and cutting, a positive electrode with three electrode active material sub-layers is obtained. An average particle hardness of the first electrode active material sub-layer in the positive electrode is 175 MPa, an average particle hardness of the second electrode active material sub-layer is 200 MPa, and an average particle hardness of the third electrode active material sub-layer is 225 MPa.

(2) Preparation of a negative electrode: 100 g of graphite negative active material, 1 g of thickener, and 1 g of emulsion are added to water in a specific order, and mixed evenly to obtain a negative active paste. The negative active material is evenly coated on a surface of a negative electrode current collector-copper foil. After drying, the negative electrode is obtained after being pressed by a roll press. The negative electrode is obtained.

(3) Preparation of a battery: The positive electrode obtained in step (1), the negative electrode obtained in step (2), and a separator are alternately stacked together, to prepare a battery in a lamination manner. The positive electrode and the negative electrode are alternately arranged, and adjacent positive electrode and negative electrode are separated by the separator, to obtain a dry battery core. The dry battery core is placed in an aluminum-plastic film outer package, electrolyte is injected, and the aluminum-plastic film outer package is left at 60°C for 48h after being vacuumized and sealed. Then, a pressure is applied at 60°C, secondary packaging is performed, venting is performed, and the capacity is divided to obtain a laminated pouch full battery with a capacity of 2.2 Ah. The prepared battery is denoted as S1.

Embodiment 2

A difference from Embodiment 1 is that: An average particle hardness of the first electrode active material sub-layer in the positive electrode is 175 MPa, an average particle hardness of the second electrode active material sub-layer is 200 MPa, and an average particle hardness of the third electrode active material sub-layer is 250 MPa. The prepared battery is denoted as S2.

Embodiment 3

A difference between from Embodiment 1 is that: An average particle hardness of the first electrode active material sub-layer in the positive electrode is 175 MPa, an average particle hardness of the second electrode active material sub-layer is 225 MPa, and an average particle hardness of the third electrode active material sub-layer is 250 MPa. The prepared battery is denoted as S3.

Embodiment 4

A difference from Embodiment 1 is that: An average particle hardness of the first electrode active material sub-layer in the positive electrode is 100 MPa, and an average particle hardness of the second electrode active material sub-layer is 5100 MPa. The prepared battery is denoted as S4.

Embodiment 5

A difference from Embodiment 1 is that: An average particle hardness of the first electrode active material sub-layer in the positive electrode is 175 MPa, an average particle hardness of the second electrode active material sub-layer is 275 MPa, and an average particle hardness of the third electrode active material sub-layer is 375 MPa. The prepared battery is denoted as S5.

Embodiment 6

100g of NCM811, 1 g of conductive agent Super P, and 0.5 g of binder PVDF5130 are added to the NMP, and mixed evenly to obtain a positive electrode paste. A preset maximum compaction density of the electrode is 3.6 g/cm$^3$. The positive electrode paste is coated on a surface of a positive electrode current collector-aluminum foil through a single-layer coating die, and then dried and wound up for secondary coating until three coating layers are reached. After drying, rolling, and cutting, a positive electrode with three electrode active material sub-layers is obtained. An average particle hardness of the first electrode active material sub-layer in the positive electrode is 175 MPa, an average particle hardness of the second electrode active material sub-layer is 200 MPa, and an average particle hardness of the third electrode active material sub-layer is 225 MPa. The prepared battery is denoted as S6.

Embodiment 7

The NCM811, the conductive agent Super P, and the binder PVDF5 130 are mixed by jet pulverization, the mixture is heated and electrospun for fiberization, and a product of electrospinning is hot-pressed to obtain electrode active material sub-layers with different hardnesses. A mass ratio of the NCM811 to the Super P to the PVDF5130 in the mixture is 100: 1: 0.5. A preset maximum compaction density of the electrode is 3.6 g/cm$^3$. The electrode active material sub-layers are stacked, hot-pressed, fused, and rolled successively on a surface of the positive electrode current collector-aluminum foil according to the hardnesses, and cut to obtain a positive electrode including three electrode active material sub-layers. An average particle hardness of the first electrode active material sub-layer in the positive electrode is 175 MPa, an average particle hardness of the second electrode active material sub-layer is 200 MPa, and an average particle hardness of the third electrode active material sub-layer is 225 MPa. The prepared battery is denoted as S7.

Embodiment 8

100 g of NCM811, 1 g of conductive agent Super P, and 0.5 g of binder PVDF5130 are added to the NMP, and mixed evenly to obtain a positive electrode paste. A preset maximum compaction density of the electrode is 3.6 g/cm$^3$. The positive electrode paste is coated on a surface of an aluminum foil through a two-layer coating die. After drying, rolling, and cutting, a positive electrode with two electrode active material sub-layers is obtained. An average particle hardness of the first electrode active material sub-layer in the positive electrode is 175 MPa, and an average particle hardness of the second electrode active material sub-layer is 225 MPa. The prepared battery is denoted as S8.

Embodiment 9

The NCM811, the conductive agent Super P, and the binder PVDF5 130 are mixed by jet pulverization, the mixture is heated and electrospun for fiberization, and a product of electrospinning is hot-pressed to obtain electrode active material sub-layers with different hardnesses. A mass ratio of the NCM811 to the Super P to the PVDF5130 in the mixture is 100: 1: 0.5. A preset maximum compaction density of the electrode is 3.65 g/cm$^3$. The electrode active material sub-layers are stacked, hot-pressed, fused, and rolled successively on a surface of the positive electrode current collector-aluminum foil according to the hardnesses, and cut to obtain a positive electrode including ten electrode active material sub-layers. From the first electrode active material sub-layer to the tenth electrode active material sub-layer, average particle hardnesses of the electrode active material sub-layers are 175 MPa, 180 MPa, 185 MPa, ..., and 220 MPa successively The prepared battery is denoted as S9.

Embodiment 10

The NCM811, the conductive agent Super P, and the binder PVDF5 130 are mixed by jet pulverization, the mixture is heated and electrospun for fiberization, and a product of electrospinning is hot-pressed to obtain electrode active material sub-layers with different hardness. A mass ratio of the NCM811 to the Super P to the PVDF5130 in the mixture is 100: 1: 0.5. A preset maximum compaction density of the electrode is 3.65 g/cm$^3$. The electrode active material sub-layers are stacked, hot-pressed, fused, and rolled successively on a surface of the positive electrode current collector-aluminum foil according to the hardnesses, and cut to obtain a positive electrode including ten electrode active material sub-layers. From the first electrode active material sub-layer to the tenth electrode active material sub-layer, and average particle hardness of the electrode active material sub-layers are 120 MPa, 140 MPa, 160 MPa, ..., and 300 MPa successively. The prepared battery is denoted as S10.

Embodiment 11

A difference from Embodiment 8 is that: A preset maximum compaction density of the electrode is 3.65 g/cm$^3$, and a quantity of electrode active material sub-layers in the electrode is 6. From the first electrode active material sub-layer to the sixth electrode active material sub-layer, average particle hardnesses of the electrode active material sub-layers are 175 MPa, 195 MPa, 215 MPa, ..., and 275 MPa successively. The prepared battery is denoted as S11.

Embodiment 12

Lithium iron phosphate (LFP), the conductive agent Super P, and the binder PVDF5130 are mixed by jet pulverization, the mixture is heated and electrospun for fiberization, and a product of electrospinning is hot-pressed to obtain electrode active material sub-layers with different hardnesses. A mass ratio of the LFP to the conductive agent to the binder is 90: 5: 5. A preset maximum compaction density of the electrode is 2.65 g/cm$^3$. The electrode active material sub-layers are stacked, hot-pressed, fused, and rolled successively on a surface of the positive electrode current collector-aluminum foil according to the hardnesses, and cut to obtain a positive electrode including ten electrode active material sub-layers. From the first electrode active material sub-layer to the tenth electrode active material sub-layer, average particle hardnesses of the electrode active material sub-layers are 175 MPa, 180 MPa, 185 MPa, ..., and 220 MPa successively The prepared battery is denoted as S12.

Embodiment 13

A difference from Embodiment 12 is that: A preset maximum compaction density of the electrode is 2.5 g/cm$^3$. A quantity of electrode active material sub-layers of a prepared positive electrode is 3. Absolute values $\delta_i$ of hardness differences between any two adjacent electrode active material sub-layers are all 25 MPa. The prepared battery is denoted as S13.

Embodiment 14

(1) Preparation of a negative electrode: 100 g of graphite negative active material, 1 g of thickener, and 1 g of emulsion are added to water in a specific order, and mixed evenly to obtain a negative active paste. A preset maximum compaction density of the electrode is 1.65 g/cm$^3$. The positive electrode paste is coated on a surface of a negative electrode current collector-copper foil through a three-layer coating die. After drying, rolling, and cutting, a negative electrode with ten electrode active material sub-layers is obtained. Average particle hardnesses of the electrode active material sub-layers are 300 MPa, 305 MPa, ..., and 345 MPa successively.
(2) Preparation of a positive electrode: 100 g of NCM811, 1 g of conductive agent Super P, and 0.5 g of binder PVDF5130 are added to N-methylpyrrolidone (NMP), and mixed evenly to obtain a positive electrode paste. The positive electrode paste is evenly coated on a surface of a positive electrode current collector-aluminum foil.
(3) Preparation of a battery: The negative electrode obtained in step (1), the positive electrode obtained in step (2), and a separator are alternately stacked together, to prepare a battery in a lamination manner. The positive electrode and the negative electrode are alternately arranged, and adjacent positive electrode and negative electrode are separated by the separator, to obtain a dry battery core. The dry battery core is placed in an aluminum-plastic film outer package, electrolyte is injected, and the aluminum-plastic film outer package is left at 60°C for 48 h after being vacuumized and sealed. Then, a pressure is applied at 60°C, secondary packaging is performed, venting is performed, and the capacity is divided to obtain a laminated pouch full battery with a capacity of 2.2 Ah. The prepared battery is denoted as S14.

Embodiment 15

A difference from Embodiment 14 is that: A maximum compaction density of the obtained negative electrode is 1.2 g/cm$^3$, a quantity of electrode active material sub-layers is 3, and absolute values $\delta_i$ of hardness differences between any two adjacent electrode active material sub-layers are all 25 MPa. The prepared battery is denoted as S15.

Embodiment 16

The positive electrode prepared in Embodiment 7 and the negative electrode prepared in embodiment 14 are assembled into a battery S16.

Embodiment 17

A difference from Embodiment 15 is that: A maximum compaction density of the prepared negative electrode is 1.63 g/cm$^3$, a quantity of electrode active material sub-layers is 2, and absolute values $\delta_i$ of hardness differences between any two adjacent electrode active material sub-layers are all 1000 MPa. The obtained battery is denoted as S17.
To highlight the beneficial effects of the embodiments of the present disclosure, the following comparative examples are set up.

Comparative example 1

NCM811, a conductive agent Super P, and a binder PVDF5130 are mixed by jet pulverization, the mixture is heated and electrospun for fiberization, and a product of electrospinning is hot-pressed to obtain an active material layer. A preset maximum compaction density of the electrode is 3.65 g/cm$^3$. A mass ratio of the NCM811 to the Super P to the PVDF5130 is 100: 1: 0.5. The active material layer is placed on a positive electrode current collector-aluminum foil, and rolling is performed to obtain a positive electrode with one electrode active material sub-layer and an average particle hardness of 220 MPa. The prepared battery is denoted as DS1.

Comparative example 2

The NCM811, the conductive agent Super P, and the binder PVDF5 130 are mixed by jet pulverization, the mixture is heated and electrospun for fiberization, and a product of electrospinning is hot-pressed to obtain electrode active material sub-layers with different hardnesses. A mass ratio of the NCM811 to the Super P to the PVDF5130 is 100: 1: 0.5. A preset maximum compaction density of the electrode is 3.65 g/cm$^3$. The electrode active material sub-layers are stacked, hot-pressed, fused, and rolled successively on the positive electrode current collector-aluminum foil according to the hardnesses, and cut to obtain a positive electrode including two electrode active material sub-layers. An average particle hardness of the first electrode active material sub-layer is 10 MPa, and an average particle hardness of the second electrode active material sub-layer is 6010 MPa. The prepared battery is denoted as DS2.

Comparative example 3

The LFP, the conductive agent Super P, and the binder PVDF5130 are mixed through jet pulverization. A preset maximum compaction density of the electrode is 2.65 g/cm$^3$. The mixture is heated and electrospun for fiberization, and a product of electrospinning is hot-pressed to obtain a pole piece. A positive electrode with one layer and an average particle hardness of 220 MPa is obtained. The prepared battery is denoted as DS3.

Comparative example 4

The LFP, the conductive agent Super P, and the binder PVDF5130 are mixed by jet pulverization, the mixture is heated and electrospun for fiberization, and a product of electrospinning is hot-pressed to obtain a pole piece. A preset maximum compaction density of the electrode is 2.65 g/cm$^3$. Two layers of the are stacked, hot-pressed, fused, and rolled to obtain a positive electrode with two layers. An average particle hardness of the first electrode active material sub-layer is 10 MPa. An average particle hardness of the second electrode active material sub-layer is 6010 MPa. The prepared battery is denoted as DS4.

Parameters of the electrodes prepared in the foregoing embodiments and comparative examples are summarized in Table 1.

Table 1 Summary of parameters of the electrodes prepared in the embodiments and the comparative examples

| Experiment number | Type of electrode active material | Preset maximum compaction density (g/cm$^3$) | Quantity of electrode active material sub-layers | Method for constructing electrode active material layer | $\delta_i$ (MPa) |
|---|---|---|---|---|---|
| Embodiment 1 | NCM811 | 3.6 | 3 | Multi-layer coating at a time | 25 |
| Embodiment 2 | NCM811 | 3.6 | 3 | Multi-layer coating at a time | $\delta_2$=25, $\delta_3$=50 |
| Embodiment 3 | NCM811 | 3.6 | 3 | Multi-layer coating at a time | $\delta_2$=50, $\delta_3$=25 |
| Embodiment 4 | NCM811 | 3.6 | 2 | Multi-layer coating at a time | 5000 |
| Embodiment 5 | NCM811 | 3.6 | 3 | Single-layer coating composition | 100 |
| Embodiment 6 | NCM811 | 3.6 | 3 | Single-layer coating composition | 25 |
| Embodiment 7 | NCM811 | 3.6 | 3 | Dry preparation | 25 |
| Embodiment 8 | NCM811 | 3.6 | 2 | Multi-layer coating at a time | 50 |
| Embodiment 9 | NCM811 | 3.65 | 10 | Dry preparation | 5 |

(continued)

| Experiment number | Type of electrode active material | Preset maximum compaction density (g/cm³) | Quantity of electrode active material sub-layers | Method for constructing electrode active material layer | $\delta_i$ (MPa) |
|---|---|---|---|---|---|
| Embodiment 10 | NCM811 | 3.65 | 10 | Dry preparation | 20 |
| Embodiment 11 | NCM811 | 3.65 | 6 | Dry preparation | 20 |
| Embodiment 12 | LFP | 2.65 | 10 | Dry preparation | 5 |
| Embodiment 13 | LFP | 2.5 | 3 | Dry preparation | 25 |
| Embodiment 14 | Graphite | 1.65 | 10 | Dry preparation | 5 |
| Embodiment 15 | Graphite | 1.2 | 3 | Multi-layer coating at a time | 25 |
| Embodiment 16 | NCM811 (positive)/Graphite (negative) | 3.6 (positive)/1.65 (negative) | 3 | Dry preparation | 25 (positive)/ 5 (negative) |
| Embodiment 17 | Graphite | 1.63 | 2 | Multi-layer coating at a time | 1000 |
| Comparative example 1 | NCM811 | 3.65 | 1 | Single-layer coating | / |
| Comparative example 2 | NCM811 | 3.65 | 2 | Dry preparation | 6000 |
| Comparative example 3 | LFP | 2.65 | 1 | Dry preparation | / |
| Comparative example 4 | LFP | 2.65 | 2 | Dry preparation | 6000 |

An electrochemical performance test is performed on the electrodes and batteries prepared in the foregoing embodiments and comparative examples, including the following test methods:

(1) The prepared electrode is rolled by using sequentially increasing pressures, cracking of the electrode active material particles in the electrode is observed, and a compaction density of the electrode is measured. Rolling is stopped when the electrode active material particles crack, and a compaction density measured in the previous experiment is taken as the maximum compaction density $\alpha$ of the electrode. The results are summarized in Table 2.
(2) Battery cycle performance test: 2.2 Ah is taken as 1 C, 1) Charge: 1/3 C constant-current constant-voltage is charged to 4.25 V/Cell, and a cut-off current is 0.05 C, and left for 30 min; (2) Discharge: 1/3 C constant-current is discharged to 2.5 V/Cell, and left for 30 min; 3) Cycling is performed for 3 times, and a third discharge capacity is recorded as an actual capacity $C_0$ of the battery; 4) Charge: The actual capacity $C_0$ of the battery is taken as 1 C, 1C constant-current constant-voltage is charged to 4.25 V, and the cut-off current is 0.05 C; 5) Left for 30 min; (6) Discharge: The actual capacity $C_0$ of the battery is taken as 1 C, and 1 C constant-current is discharged to 2.5 V; 7) Left for 30 min; 8) 4) to 7) are cycled for a total of 500 times. (Because the positive active material used in Embodiments 12 and 13 and Comparative examples 3 and 4 is LFP, an upper limit voltage is set to 3.8 V and a lower limit voltage is set to 2.0 V during testing). The capacity retention rate of the battery after the 500 cycles and the results of direct current resistance (DCIR) measurement under the load are summarized in Table 3.
(3) The fully-charged batteries S1 to S12 and DS1 to DS4 are disassembled to obtain the positive electrodes of the batteries S1 to S17 and DS1 to DS4. A specific amount of electrolyte is added to the positive electrodes. After the electrolyte fully penetrates, a sample is prepared, and a differential scanning calorimetry (differential scanning calorimetry, DSC) test is performed. A specific test condition is that: In an air atmosphere, a temperature increase starts from a room temperature at a temperature increase rate of 5 °C/min, and a thermal decomposition temperature of the electrode is measured. The results are summarized in Table 4.

Table 2: Maximum compaction density of the electrodes obtained in the embodiments and the comparative examples

| Experiment number | Maximum compaction density $\alpha$ (g/cm$^3$) |
|---|---|
| Embodiment 1 | 3.61 |
| Embodiment 2 | 3.60 |
| Embodiment 3 | 3.61 |
| Embodiment 4 | 3.57 |
| Embodiment 5 | 3.59 |
| Embodiment 6 | 3.60 |
| Embodiment 7 | 3.61 |
| Embodiment 8 | 3.60 |
| Embodiment 9 | 3.67 |
| Embodiment 10 | 3.65 |
| Embodiment 11 | 3.65 |
| Embodiment 12 | 2.65 |
| Embodiment 13 | 2.50 |
| Embodiment 14 | 1.66 |
| Embodiment 15 | 1.28 |
| Embodiment 16 | 3.61 (positive)/1.65 (negative) |
| Embodiment 17 | 1.62 |
| Comparative example 1 | 3.56 |
| Comparative example 2 | 3.51 |
| Comparative example 3 | 2.57 |
| Comparative example 4 | 2.53 |

Table 3 Capacity retention rate and DCIR increase rate of batteries prepared in the embodiments and comparative examples

| Battery number | Capacity retention rate (%) after 500 cycles | DCIR increase rate (%) after 500 cycles |
|---|---|---|
| S1 | 95.2 | 23.5 |
| S2 | 95.1 | 23.3 |
| S3 | 95.2 | 23.8 |
| S4 | 93.5 | 26.7 |
| S5 | 94.7 | 25.3 |
| S6 | 94.4 | 25.7 |
| S7 | 96.1 | 20.6 |
| S8 | 94.7 | 24.4 |
| S9 | 93.4 | 23.9 |
| S10 | 93.0 | 24.8 |
| S11 | 92.0 | 25.2 |
| S12 | 98.2 | -18.7 |

(continued)

| Battery number | Capacity retention rate (%) after 500 cycles | DCIR increase rate (%) after 500 cycles |
|---|---|---|
| S13 | 98.6 | -20.5 |
| S14 | 95.4 | 23.7 |
| S15 | 94.3 | 25.1 |
| S16 | 96.0 | 21.0 |
| S17 | 93.6 | 27.9 |
| DS1 | 89.4 | 45.8 |
| DS2 | 91.5 | 38.7 |
| DS3 | 93.1 | -3.4 |
| DS4 | 92.7 | -0.8 |

Table 4 Thermal decomposition temperature of positive electrodes disassembled in the batteries of the embodiments and the comparative examples

| Battery number | Thermal decomposition temperature (°C) |
|---|---|
| S1 | 220.1 |
| S2 | 220.8 |
| S3 | 220.4 |
| S4 | 223.7 |
| S5 | 220.2 |
| S6 | 219.5 |
| S7 | 219.7 |
| S8 | 220.3 |
| S9 | 218.6 |
| S10 | 216.7 |
| S11 | 215.4 |
| S12 | 478.2 |
| S13 | 481.6 |
| S16 | 220.3 (positive) |
| DS1 | 212.4 |
| DS2 | 214.3 |
| DS3 | 452.3 |
| DS4 | 459.7 |

It can be seen from the data in Table 2 and Table 3 that, while the particle integrity of the electrode active material is maintained, the maximum compaction density of the electrode active material in the electrode provided in Embodiments 1 to 17 of the present disclosure is close to the preset maximum compaction density. In a case that the materials are the same, the maximum compaction density of the electrode in the embodiments is significantly higher than that in the comparative examples. More electrode active material sub-layers of the electrode and smaller hardness difference between adjacent sub-layers indicate a larger maximum compaction density of the electrode (refer to Embodiments 9 and 11). When the maximum compaction density of the electrode is within an appropriate range, a larger maximum compaction density indicates a larger energy density of the corresponding battery. However, when the electrode active materials of the pole pieces in the battery are the same, the battery capacity retention rates of the batteries S1 to S17 of the embodiments are higher than those of the comparative examples, and direct current internal resistances of the batteries of the embodiments are relatively small. The thermal decomposition temperature of the positive electrode is measured, and it is found that when the same electrode active material is used, the thermal decomposition temperature of the positive electrode prepared in the embodiments is higher than that of the comparative examples (when the electrode active material is NCM811, refer to S1 to S11 and S16 in Embodiments, and DS1 and DS2 in Comparative examples. When the electrode active material is LFP, refer to S12 and S13 in Embodiments, and DS3 and DS4 in Comparative examples). It shows that the positive electrodes provided in the embodiments of the present disclosure have better thermal stability, and can provide a battery with more stable high-temperature performance and higher safety performance. Particularly, the positive electrodes used in S16 and S7 are the same, but there is a difference in the thermal decomposition temperatures, which is a normal experimental error.

In conclusion, the electrodes in the embodiments of the present disclosure may be used to provide a battery with a high energy density and a long cycle life.

The foregoing descriptions are exemplary implementations of the present disclosure. It should be noted that, a person of ordinary skill in the art may make improvements and modifications without departing from the principle of the present disclosure. All such improvements and refinements shall fall within the protection scope of the present disclosure.

**Claims**

1. An electrode (100), comprising a current collector (11) and an electrode active material layer (10) arranged on at least one side surface of the current collector (11), wherein the electrode active material layer (10) comprises at least two electrode active material sub-layers, and the electrode active material sub-layers meet the following relational expressions:

$$n \times \delta_i \leq 10000, \ n \geq 2, \ \text{and} \ \delta_i \leq 5000;$$

and

$$H_{i-1} < H_i,$$

wherein n represents a total quantity of the electrode active material sub-layers, and i is any integer value between 2 and n; and $H_i$ represents hardness of an $i^{th}$ electrode active material sub-layer, and $H_1$ represents hardness of a first electrode active material sub-layer (101), both in units of MPa, wherein the first electrode active material sub-layer (101) is in contact with the current collector (11); and $\delta_i$ represents an absolute value of a hardness difference between the $i^{th}$ electrode active material sub-layer and an $(i-1)^{th}$ electrode active material sub-layer, and is in units of MPa.

2. The electrode (100) according to claim 1, wherein $\delta_i \leq 1200$.

3. The electrode (100) according to claim 1, wherein n, $\delta_i$, and a maximum compaction density $\alpha$ of the electrode meet the following quantitative relation: when 1.4 g/cm$^3 \leq \alpha <$ 1.7 g/cm$^3$, n$\geq$2, and $\delta_i \leq 1000$.

4. The electrode (100) according to claim 1, wherein n, $\delta_i$, and a maximum compaction density $\alpha$ of the electrode meet the following quantitative relation: when 2.5 g/cm$^3 \leq \alpha <$ 2.75 g/cm$^3$, n$\geq$2, and $\delta_i \leq 700$.

5. The electrode (100) according to claim 1, wherein n, $\delta_i$, and a maximum compaction density $\alpha$ of the electrode meet the following quantitative relation: when 3.3 g/cm$^3 \leq \alpha <$ 3.75 g/cm$^3$, n$\geq$2, and $\delta_i \leq 600$.

6. The electrode (100) according to any one of claims 1 to 5, wherein $\delta_i \leq 100$.

7. The electrode (100) according to any one of claims 1 to 6, wherein $\delta_i \leq 50$.

8. The electrode (100) according to claim 1 or 2, wherein a value of a maximum compaction density $\alpha$ of the electrode (100) meets: 0 g/cm$^3 < \alpha <$ 10 g/cm$^3$.

9. The electrode (100) according to claim 7, wherein a value of the maximum compaction density $\alpha$ of the electrode meets: 0 g/cm$^3 < \alpha <$ 5 g/cm$^3$.

10. The electrode (100) according to claim 1, wherein n, $\delta_i$, and $\alpha$ meet the following quantitative relation: when 1.3 g/cm$^3 \leq \alpha <$ 1.8 g/cm$^3$, or 2.6 g/cm$^3 \leq \alpha <$ 2.8 g/cm$^3$, or 3.65 g/cm$^3 < \alpha <$ 5 g/cm$^3$, n$\geq$10, and $\delta_i \leq 5$.

11. The electrode (100) according to any one of claims 1 to 10, wherein in the electrode (100), absolute values of hardness differences between any two adjacent electrode active material sub-layers are equal.

12. The electrode (100) according to any one of claims 1 to 11, wherein the electrode is a positive electrode, and the positive electrode is loaded with a positive active material, wherein the positive active material comprises at least one of lithium iron phosphate, lithium manganese phosphate, lithium iron manganese phosphate, lithium vanadium phosphate, lithium cobalt phosphate, lithium cobaltate, lithium manganate, lithium nickel manganate, a lithium nickel cobalt manganese oxygen ternary material, a lithium nickel cobalt aluminum oxygen ternary material, or a lithium nickel manganese cobalt aluminum oxygen quaternary material.

13. The electrode (100) according to any one of claims 1 to 11, wherein the electrode is a negative electrode, and the negative electrode is loaded with a negative active material; and the negative active material comprises at least one of graphite, natural graphite, mesocarbon microbeads, or a silicon-carbon anode material.

14. The electrode (100) according to any one of claims 1 to 11, wherein the electrode is a positive electrode, the positive electrode is loaded with a positive active material, and the positive active material comprises a multi-element nickel-containing active material doped with magnesium, wherein the multi-element nickel-containing active material comprises at least one of a lithium nickel cobalt manganese oxygen ternary material, a lithium nickel cobalt aluminum oxygen ternary material, or a lithium nickel manganese cobalt aluminum oxygen quaternary material.

15. The electrode (100) according to claim 14, wherein a mass content of a magnesium element in the multi-element nickel-containing active material doped with magnesium is greater than 0 and less than 4000 ppm.

16. The electrode (100) according to claim 12 or 14, wherein a general structural formula of the lithium nickel cobalt manganese oxygen ternary material is $Li_{1+m}Ni_xCo_yMn_{1-x-y}O_2$, wherein $x \geq 0.33$, $0 \leq y \leq 0.4$, and $0 \leq m \leq 0.1$.

17. The electrode (100) according to claim 12 or 14, wherein a general structural formula of the lithium nickel cobalt aluminum oxygen ternary material is $Li_{1+m}Ni_xCo_yAl_{1-x-y}O_2$, wherein $x \geq 0.33$, $0 \leq y \leq 0.4$, and $0 \leq m \leq 0.1$.

18. The electrode (100) according to claim 12 or 14, wherein a general structural formula of the lithium nickel manganese cobalt aluminum oxygen quaternary material is $Li_{1+m}Ni_xCo_yMn_zAl_{1-x-y-z}O_2$, wherein $x \geq 0.33$, $0 \leq y \leq 0.4$, $0 \leq z \leq 0.4$, and $0 \leq m \leq 0.1$.

19. The electrode (100) according to any one of claims 16 to 18, wherein a value range of x is: $0.70 \leq x \leq 0.98$.

20. A lithium battery (200), comprising the electrode (100) according to any one of claims 1 to 19.

21. A motor vehicle (300), comprising the lithium battery (200) according to claim 20.

100

10n
...
102
101
10
11

FIG. 1

Lithium battery 200

Electrode 100

FIG. 2

Motor vehicle 300

Lithium battery 200

Electrode 100

FIG. 3

## INTERNATIONAL SEARCH REPORT

| International application No. |
| --- |
| **PCT/CN2023/083782** |

**A. CLASSIFICATION OF SUBJECT MATTER**

H01M4/131(2010.01)i; H01M4/133(2010.01)i; H01M10/0525(2010.01)i

According to International Patent Classification (IPC) or to both national classification and IPC

**B. FIELDS SEARCHED**

Minimum documentation searched (classification system followed by classification symbols)

IPC:H01M

Documentation searched other than minimum documentation to the extent that such documents are included in the fields searched

Electronic data base consulted during the international search (name of data base and, where practicable, search terms used)

CNTXT, ENTXTC, CNKI, DWPI, ENTXT: 第一, 第二, 内层, 外层, 硬度, 活性, 层, first, second, inner layer, outer layer, hardness, activity, layer

**C. DOCUMENTS CONSIDERED TO BE RELEVANT**

| Category* | Citation of document, with indication, where appropriate, of the relevant passages | Relevant to claim No. |
| --- | --- | --- |
| Y | KR 20170031452 A (LG CHEMICAL LTD.) 21 March 2017 (2017-03-21) description, paragraphs [0015]-[0096] | 1-21 |
| Y | JP 2018107060 A (TOPPAN PRINTING CO., LTD.) 05 July 2018 (2018-07-05) description, paragraphs [0010]-[0029] | 1-21 |
| Y | CN 111785921 A (SVOLT ENERGY TECHNOLOGY CO., LTD.) 16 October 2020 (2020-10-16) description, paragraphs [0006]-[0094] | 1-21 |
| Y | CN 112614969 A (SVOLT ENERGY TECHNOLOGY CO., LTD.) 06 April 2021 (2021-04-06) description, paragraphs [0008]-[0106] | 1-21 |
| A | CN 109755670 A (NINGDE CONTEMPORARY AMPEREX TECHNOLOGY CO., LTD.) 14 May 2019 (2019-05-14) entire document | 1-21 |

☐ Further documents are listed in the continuation of Box C.      ☑ See patent family annex.

| * Special categories of cited documents: | "T" later document published after the international filing date or priority date and not in conflict with the application but cited to understand the principle or theory underlying the invention |
| --- | --- |
| "A" document defining the general state of the art which is not considered to be of particular relevance | |
| "D" document cited by the applicant in the international application | "X" document of particular relevance; the claimed invention cannot be considered novel or cannot be considered to involve an inventive step when the document is taken alone |
| "E" earlier application or patent but published on or after the international filing date | |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
| --- | --- |
| **24 May 2023** | **31 May 2023** |

| Name and mailing address of the ISA/CN | Authorized officer |
| --- | --- |
| **China National Intellectual Property Administration (ISA/ CN)** **China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**
Information on patent family members

International application No.

**PCT/CN2023/083782**

| Patent document cited in search report | | | Publication date (day/month/year) | Patent family member(s) | | | Publication date (day/month/year) |
|---|---|---|---|---|---|---|---|
| KR | 20170031452 | A | 21 March 2017 | KR | 102096821 | B1 | 03 April 2020 |
| JP | 2018107060 | A | 05 July 2018 | JP | 6787117 | B2 | 18 November 2020 |
| CN | 111785921 | A | 16 October 2020 | CN | 111785921 | B | 17 May 2022 |
| CN | 112614969 | A | 06 April 2021 | CN | 112614969 | B | 24 February 2023 |
| CN | 109755670 | A | 14 May 2019 | CN | 109755670 | B | 17 November 2020 |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202210296429